# EUROPÄISCHE PATENTSCHRIFT

(11) **EP 0 669 051 B1**
(45) Veröffentlichungstag und Bekanntmachung des Hinweises auf die Patenterteilung: **05.08.1998**
(21) Anmeldenummer: 93921895.4
(22) Anmeldetag: 30.09.1993
(51) Int. Cl.: H02K 3/12

(54) **MEHRPHASIGE ELEKTRISCHE MASCHINE MIT ACHSPARALLELEN NUTSTÄBEN**
MULTIPHASE ELECTRIC MACHINE WITH CO-AXIAL SLOT RODS
MACHINE ELECTRIQUE POLYPHASEE COMPORTANT DES TIGES POUR ENCOCHES COAXIALES

(30) Priorität: 09.10.1992 DE 4234175; 09.10.1992 DE 4234129
(43) Veröffentlichungstag der Anmeldung: 30.08.1995
(73) Patentinhaber: HILL, Wolfgang, 76135 Karlsruhe (DE)
(72) Erfinder: HILL, Wolfgang, 76135 Karlsruhe (DE)
(86) Internationale Anmeldenummer: EP9302675
(87) Internationale Veröffentlichungsnummer: WO9409547

(56) Entgegenhaltungen:
- WO-A-93/03534
- FR-A- 1 405 924
- US-A- 3 252 027
- US-A- 4 115 915

## Beschreibung

Die Erfindung betrifft eine mehrphasige elektrische Maschine mit achsparallelen Nutstäben gemäß dem Oberbegriff des Anspruch 1.

Bei der Steigerung der Leistungsdichte hocheffizienter elektrischer Maschinen spielt die Bauform und Anordnung der Leiter eine entscheidende Rolle.

Aus der **US-PS 41 15 915** ist ein Verfahren bekannt, indem achsparallele Nutstäbe durch auf Isolierplatten geklebte, gebogene Profilleiter verbunden werden. Die große Anzahl und die Bauform der Verbindungsstellen führen in diesem Verfahren jedoch zu einem hohen Fertigungsaufwand und vergrößern die Störanfälligkeit.

Der Erfindung liegt daher die Aufgabe zugrunde, eine elektrische Maschine mit achsparallelen Nutstäben derart weiterzubilden, daß eine hohe Leistungsdichte bei geringen Verlusten sowie eine kostengünstige und einfache Herstellung mit guten Kontroll- und Nachbesserungsmöglichkeiten erreicht wird.

Erfindungsgemäß wird diese Aufgabe durch die kennzeichnenden Merkmale des Anspruchs 1 gelöst, wobei eine nahezu vollständige Raumausnutzung und kurze Leiterlängen erreicht werden. Durch einen Leiterverlauf in mäanderförmigen Lagen oder achterförmigen Schleifen wird der Verbindungskopfraum gleichmäßig zur Stromleitung ausgenutzt, wobei durch die Verwendung von Kunststäben der Isoliermaterialanteil in den Verbindungsköpfen und die Anzahl der unterschiedlichen Verbindungsleiterbauformen minimiert wird. Vorgeferigte Einheiten halbieren die bei der Montage zu realisierenden Verbindungsstellen auf die Anzahl der Nutstäbe, wodurch in Ausführungsformen mit halbierten Verbindungsköpfen alle bei der Montage zu realisierenden Verbindungsstellen auch nachträglich noch jederzeit für Prüf- und Reparaturzwecke zugänglich sind. Weiterhin wird das Verschweißen der Leiterteile durch die axiale Vergrößerung der Verbindungsleiterenden und eine konische Ausgestaltung der Kontaktflächen wesentlich verbessert. In der Beschreibung werden alle Verbindungsleiter, die in einer Stegschicht Nutstäbe von zwei Nuten benachbarter Polteilungen miteinander verbinden, verbal als Sektoren zusammengefaßt. Verbindungsköpfe mit o-förmigen Sektoren nutzen nicht nur den Raum auf Höhe der Rückschlüsse des weichmagnetischen Körpers, sondern auch den Raum auf Höhe des Luftspaltes und der Magnete aus.

Die Zeichnungen stellen vorteilhafte Ausführungsformen der Erfindung dar.
- Figur 1: zeigt den Leiterverlauf und die Seitenansichten der Stegschichten eines Leiterstranges mit versetzten Lagen;
- Figur 2: zeigt den Leiterverlauf und die Seitenansichten der Stegschichten eines Leiterstranges mit achterförmigen Schleifen;
- Figur 3: zeigt einen Ausschnitt aus dem Verbindungskopf einer dreiphasigen, zweilagigen Maschine mit o-förmigen Verbindungsleitern;
- Figur 4: zeigt einen Ausschnitt aus den beiden Leiterstränge einer zweiphasigen, dreilagigen Maschine mit o-förmigen Sektoren;
- Figur 5: zeigt den Ausschnitt mit Wechselleitern aus einem Leiterstrang einer vierphasigen Maschine mit halbierten Verbindungsköpfen und o-förmigen Sektoren;
- Figur 6: zeigt die Seitenansichten der beiden Stegschichten eines dreilagigen Leiterstranges aus einer vierphasigen, zwölfpoligen Maschine mit u-förmigen Verbindungsleitern;
- Figur 7: zeigt alle Einheiten des Leiterstranges aus Figur 6 beim Zusammenschieben zu einer Einheiten steg schicht;
- Figur 8: zeigt alle Verbindungs-, Wechsel- und Anschlußleiter der beiden Stegschichten einer äußeren Verbindungskopfhälfte der Maschine aus Figur 6.

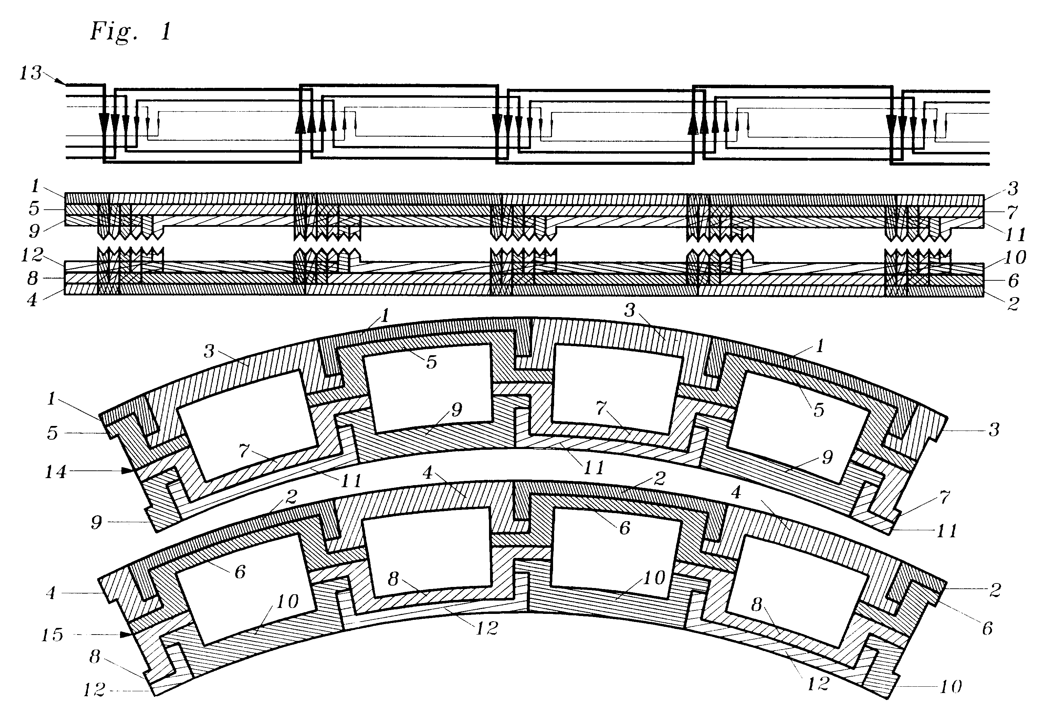

**Figur 1** zeigt einen Ausschnitt aus dem Verlauf und den Seitenansichten der beiden Stegschichten **14, 15** eines Leiterstranges **13** in Lagen, wobei ein sechsphasiger Leiteraufbau mit sechs Nutstäben pro Nut (z_{N} = 6) gewählt wurde. Die Verbindungsköpfe sind halbiert, dies ist an den großen Fenstern in den o-förmigen Sektoren sowohl in der vorderen Stegschicht **15** als auch in der hinteren Stegschicht **14** erkennbar. Die durch ihre Reihenschaltung den Leiterstrang **13** bildenden Leiterelemente sind mit **1** bis **12** durchnummeriert. Wenn der Strom - wie durch die Pfeile symbolisiert - oben links in den betrachteten Umfangsausschnitt eintritt, fließt er zuerst mäanderförmig in der aus den Leiterelementen **1** und **2** gebildeten ersten Lage von links nach rechts, dann in der zweiten Lage in Leiterelementen **3** und **4** von rechts nach links, usw.. Jede Lage besteht somit aus der Reihenschaltung aller Nutstäbe einer Phase, die den gleichen Abstand zum Luftspalt aufweisen. Der Stegraum wird vollständig und gleichmäßig zur Stromleitung ausgenutzt, indem die Ströme in aufeinanderfolgenden Lagen tangential entgegengesetzt fließen. In den Verbindungsköpfen nutzen die Verbindungsleiter hierbei den Raum aus, der im weichmagnetischen Körper von den Zähnen eingenommen wird. Der Lagenwechsel erfolgt außerhalb des Bildausschnittes in Wechselleitern, die unsymmetrische Enden aufweisen. Die Schraffur der den Strom von links nach rechts leitenden Elemente ist dichter gewählt. Außerdem wird der Schraffurwinkel mit abnehmender Spannung kleiner.

Eine weitere Rückführungsvariante, die eine Minimierung der unterschiedlichen Verbindungsleiterbauformen verbunden mit einer gleichmäßigen Ausnutzung des Verbindungskopfes ermöglicht, weist einen achterförmigen Verlauf in einer oder zwei Lagen auf. Bei ungeradem z_{N} durchläuft ein Leiterstrang nur einmal in vorwärds- und rückwärdsgerichteten Schleifen den Umfang der Maschine und wird daher als *einlagig* bezeichnet. Bei geradem z_{N} durchläuft der Leiterstrang nachdem ersten Umlauf mit Schleifen den Maschinenumfang noch einmal in tangenial entgegengesetzter Richtung, woraus die Bezeichnung *zweilagig* resultiert.

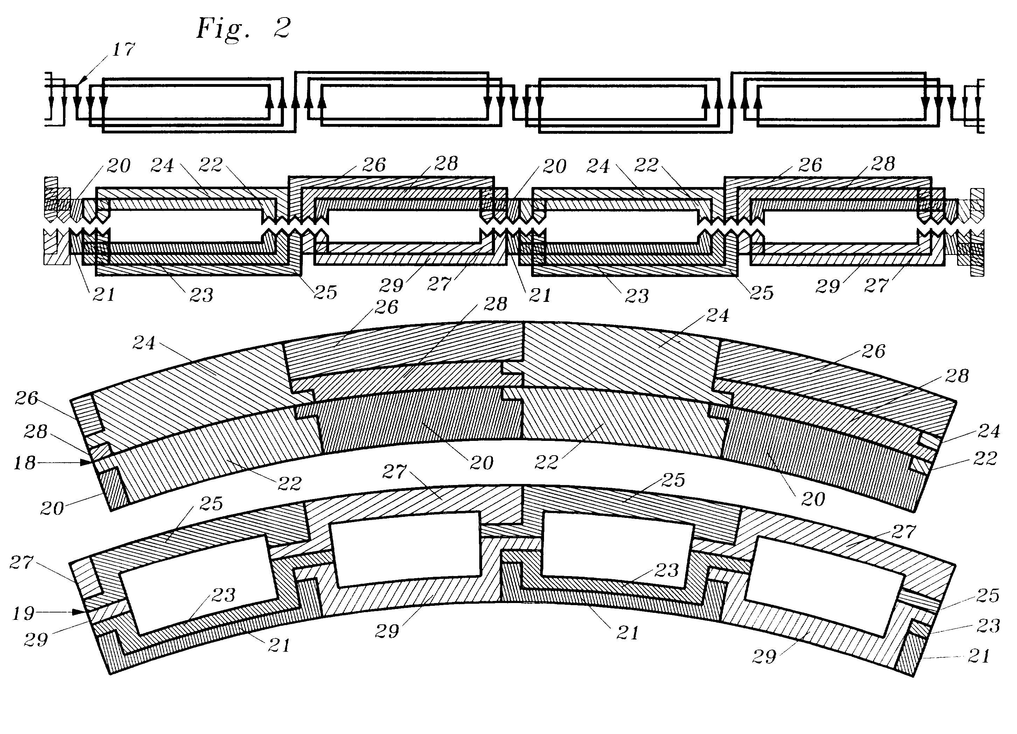

**Figur 2** zeigt einen Umfangsausschnitt aus einem Leiterstrang mit einlagigem, achterförmigem Verlauf aus einer fünfphasigen Maschine ohne halbierte Verbindungsköpfe, wobei die unten abgebildete Stegschicht **19** die innerste Stegschicht des vorderen Verbindungskopfes und die darüber angeordnete Stegschicht **18,** die äußerste Stegschicht des hinteren Verbindungskopfes darstellt. Während die innere Stegschicht **19** links und rechts der von ihr kontaktierten Nutstäbe jeweils nur die volle Zahnfläche einnimmt, kann die äußere Stegschicht **18,** da sie keine Nutstäbe anderer Leiterstränge berücksichtigen muß, die gesamte Verbindungskopfhöhe ausnutzen. In der Darstellung tritt der Strom oben links in den betrachteten Umfangsausschnitt des Leiterstranges **17** ein und durchfließt in zwei benachbarten Polteilungen zehn Leiterelemente in der Reihenfolge **20** bis **29.** Der Strom wechselt seine tangentiale Flußrichtung fast bei jedem Durchgang durch den weichmagnetichen Körper. Nur beim Übergang von Leiterelement **20** zu **21** und **25** zu **26** behält er die vorherrschende Richtung von links nach rechts bei. An diesen Stellen ändert sich dafür die Drehrichtung der Schleifen. Die Leiterelemente **20** und **22** bzw. **25** und **27** sind baugleich und Wechselleiter werden nicht benötigt, so daß sich jede Stegschicht nur aus vier unterschiedlichen Leiterbauformen zusammensetzt.

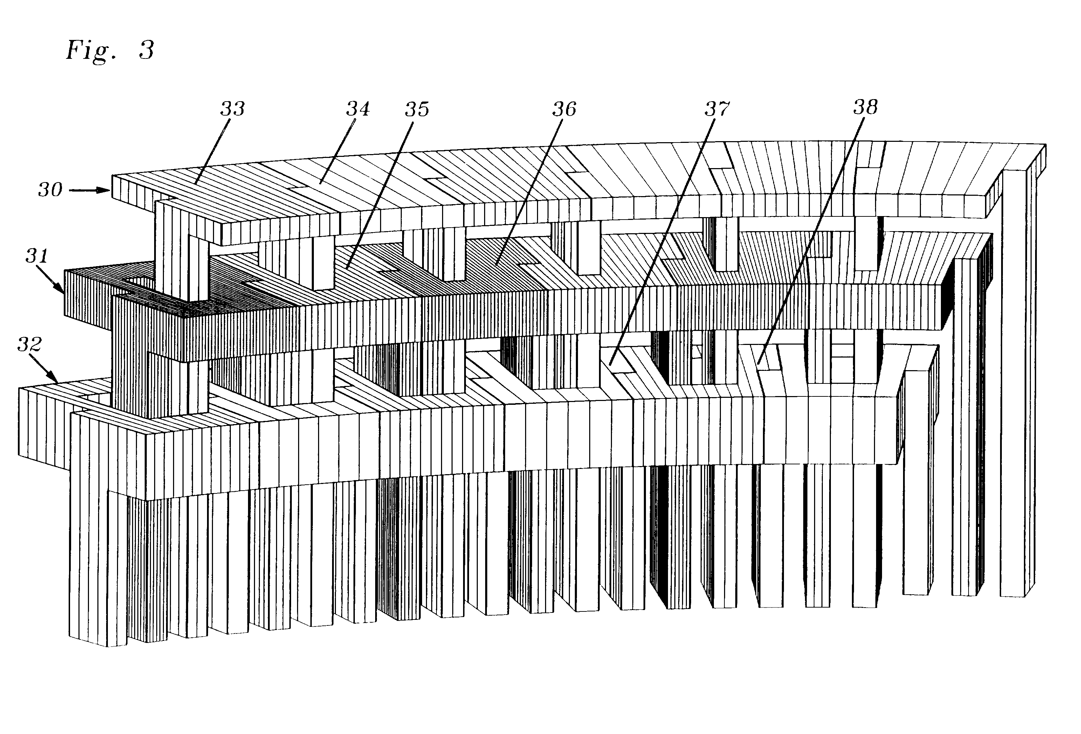

In **Figur 3** ist ein sechs Polteilungen umfassender Ausschnitt aus dem Verbindungskopf einer dreiphasige Maschine ohne halbierte Verbindungsköpfe dreidimensional dargestellt. Die Stegschichten **30, 31, 32,** die nach dem axialen Zusammenschieben flächig aneinanderliegen, weisen - damit die Bauformen sichtbar sind - einen Abstand zueinander auf. Weiterhin bestehen zur besseren Anschauung alle Stegschichten aus Einheiten **33** - **38**, die jeweils Nutstäbe mit unterschiedlichem Abstand zur Nutöffnungsfläche verbinden, wodurch alle Leiterelemente einer Stegschicht baugleich sind. Der Strom fließt in einer Stegschicht in tangential aufeinanderfolgenden Leiterelementen in unterschiedliche Richtungen. Die überschneidungsfreien äußeren Stegschichten **30** decken in den dargestellten Ausführungsformen die gesamte Außenfläche ab. Alternativ konnen die beiden äußeren Stegschichten jedoch auch wie bei halbierten Verbindungsköpfen Fenster aufweisen in denen Leiterquerschnittsvergrößerungen der zweitäußersten Stegschichten axial bis nach Außen reichen. Wenn dann die inneren Stegschichten aus Einheiten aufgebaut werden, sind alle bei der Montage zu realisierenden Verbindungsstellen von außen zugänglich. Durch die großen, rechteckförmigen Leiterquerschnitte und das flächige Aneinanderfügen von Leiterteilen, ergeben sich hohe Leistungsdichten bzw. geringe ohmsche Verluste sowie ein stabiler Aufbau des gesamten Leiteraufbaus, wobei zusätzlich die Ableitung der Verlustwärme über den weichmagnetischen Körper oder direkt zu einem anliegenden Kühlkörper verbessert wird. Aufgrund der einseitigen Stromverdrängung kann es für die gewünschte Nuttiefe erforderlich sein Kunststäbe einzusetzen.

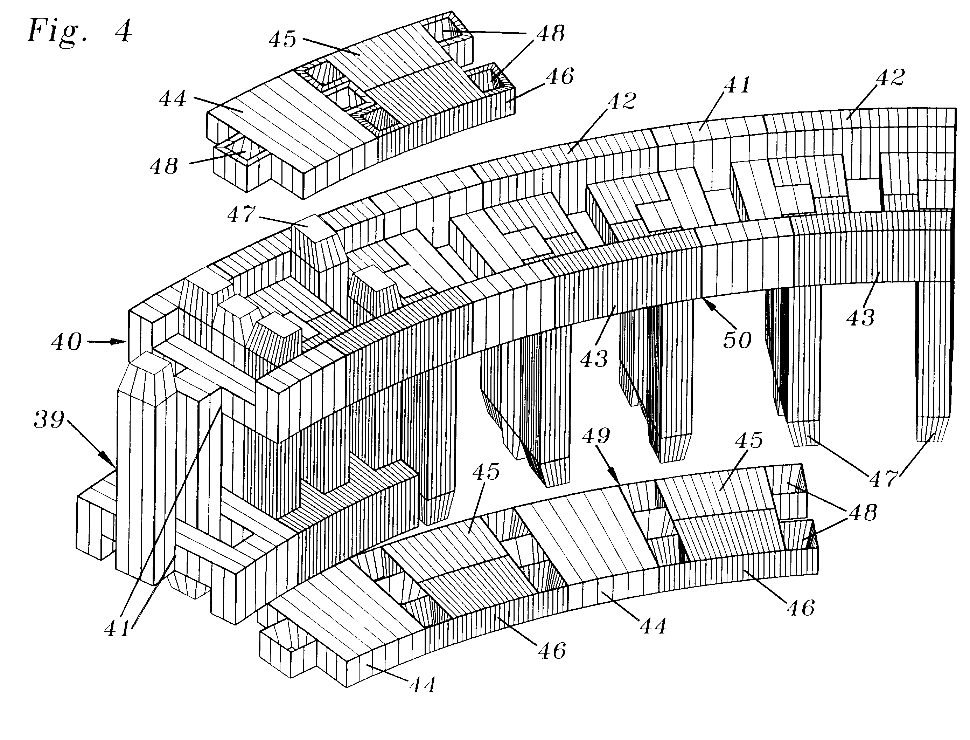

**Figur 4** zeigt einen Umfangsausschnitt der beiden Leiterstränge **39** und **40** einer zweiphasigen Maschine, wobei von einem Leiterstrang **39** zwei Polteilungen, vom anderen Leiterstrang **40** dagegen sechs Polteilungen dargestellt sind. Die symmetrischen Leiterelementenden weisen auf die Rückführungsvariante in versetzten Lagen hin. Als Besonderheit wird der Stegraum ausschließlich durch die axial verbreiterten Stege der Einheiten **41, 42, 43** genutzt, während sich die überschneidungsfreien Verbindungsleiter **44, 45, 46** auf den in Nuthöhe liegenden Verbindungskopfraum beschränken. Dabei liegen die Stege der Einheiten **41, 42, 43** radial sowohl oberhalb als auch unterhalb der Nuthöhe, womit es sich um eine Bauform mit o-förmigen Sektoren handelt. Die Enden **47** der Einheiten sind konisch ausgestaltet und werden von den Aussparungen **48** der Verbindungsleiter von allen vier Seiten umschlossen. Beim Aufpressen werden die unvermeidlichen Fertigungstoleranzen durch eine geringfügige Verformung des weichen Leitermaterials ausgeglichen und damit günstige Voraussetzungen für das lokale Aufschmelzen der Verbindungsstellen schaffen. Die im linken Bildausschnitt dargestellten beiden Leiterstränge **39, 40** bilden nachdem axialen Zusammenschieben kompakte, hohlraumfreie Verbindungsköpfe, wobei die Verbindungsleiterstegschichten **49** radial innerhalb der Einheitenstegschichten **50** liegen. Die beiden Leiterstränge sind identisch aufgebaut.

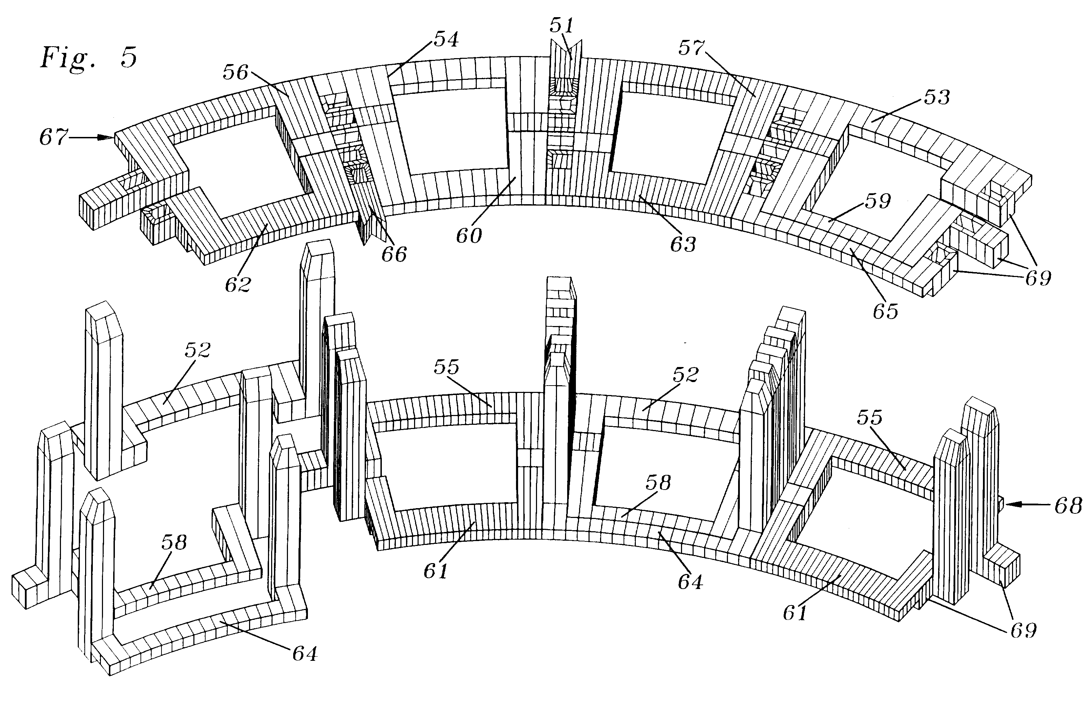

**Figur 5** zeigt einen Leiterstrang aus einer fünflagigen, vierphasigen Maschine, wobei nun ein Ausschnitt gewählt wurde, der Wechselleiter beinhaltet. Die axiale Vergrößerung des Leiterquerschnitts der auf Nuthöhe liegenden Enden der Verbindungsleiter trägt zur besseren Raumausnutzung in den Verbindungsköpfen bei und verdoppelt die Kontaktfläche zwischen Verbindungsleitern und Nutstäben, wobei die Leiterquerschnittsvergrößerungen **69** in der inneren Stegschicht **68** um eine Nutbreite schmäler als in der äußeren Stegschicht **67** ausgeführt sind. Da ihre axialen Leiterquerschnittsvergrößerungen **69** zum weichmagnetischen Körper hinweisen, liegen die Anschlußleiter **51, 66** und die Wechselleiter **54, 57, 60, 63** in der äußersten Stegschicht **67.** Der Strom tritt durch den oben in der Mitte dargestellten Anschlußleiter **51** in den Leiterstrang ein, durchläuft dann in der ersten Lage, die ausschließlich durch eine Einheitenbauform **52** und eine Verbindungsleiterbauform **53** gebildet wird, den gesamten Maschinenumfang und wechselt direkt bei der Anfangsnut durch den ersten Wechselleiter **54** in die zweite Lage. Diese wird nun wiederum durch zwei Leiterelemente **55** und **56** gebildet und durchläuft den gesamten Maschinenumfang in umgekehrter Richtung. Alle vier Wechselleiter **54, 57, 60, 63** sind am Ende ihrer Lage mit Nutstäben der Anfangsnut verbunden, wobei die letzte Lage (114, 115), anstatt mit einem Wechselleiter direkt im zweiten Anschlußleiter **66** endet. Während die Anzahl der unterschiedlichen Leiterelementbauformen durch die beiden Wechselsektoren in der Verbindungsleiterstegschicht **67** auf elf ansteigt (5V+4W+2A) weist die Einheitenstegschicht **68** nur fünf unterschiedliche Bauformen auf.

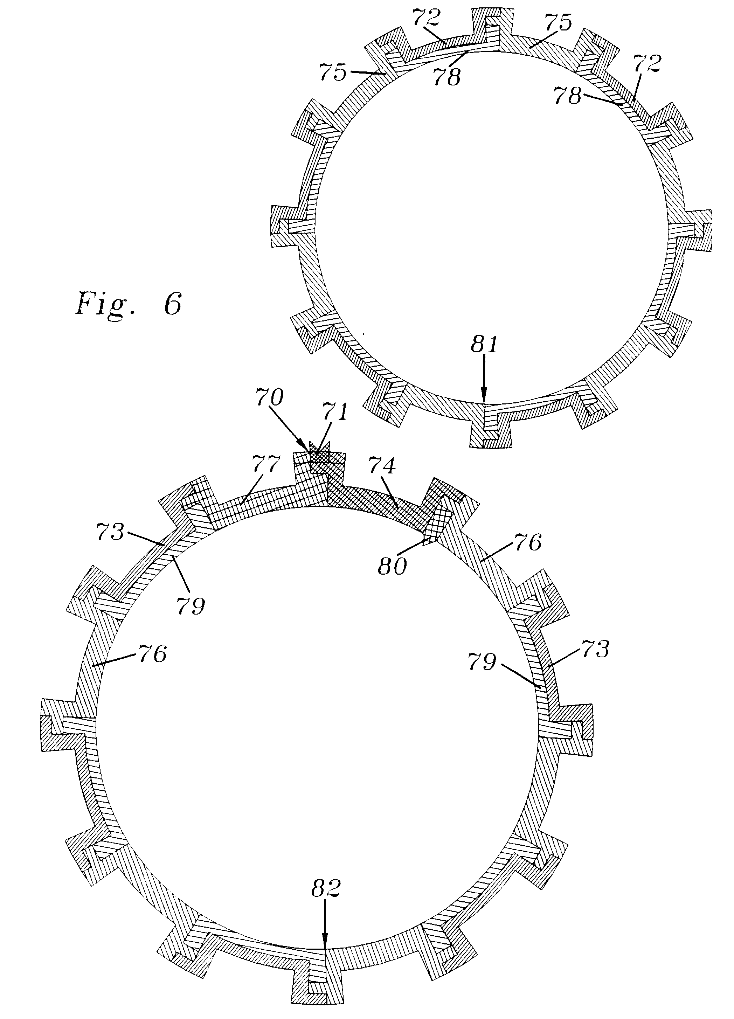

In den **Figuren 6, 7** und **8** wird der Aufbau eines ringförmigen Leiteraufbaus am Beispiel einer vierphasigen, zwölfpoligen Maschine mit halbierten Verbindungsköpfen und u-förmigen Sektoren dargestellt, wobei ein Leiterverlauf mit versetzten Lagen für z_{N} = 3 gewählt wurde.

**Figur 6** zeigt die Stirnseitenansichten der beiden Stegschichten **81, 82** des Leiterstranges **70.** Die rechts oben abgebildete Einheitenstegschicht **81** gehört zur inneren Hälfte des hinteren Verbindungskopfes und ist etwas kleiner dargestellt. Sie weist keine Wechselsektoren auf und besteht vorteilhaft aus drei Einheitenbauformen **72, 75, 78**. Im Vordergrund unten links ist die zugehörige Verbindungsleiterstegschicht **82** dargestellt. Diese besteht neben drei Verbindungsleiterbauformen **73, 76, 79** in den obersten beiden Sektoren aus zwei Wechselleitern **74, 77** sowie zwei Anschlußleitern **71, 80.** Insgesamt besteht der Leiterstrang somit aus zehn unterschiedlichen Leiterbauformen (3E+3V+2W+2A). Leiterelemente der gleichen Lage sind im gleichen Winkel schraffiert.

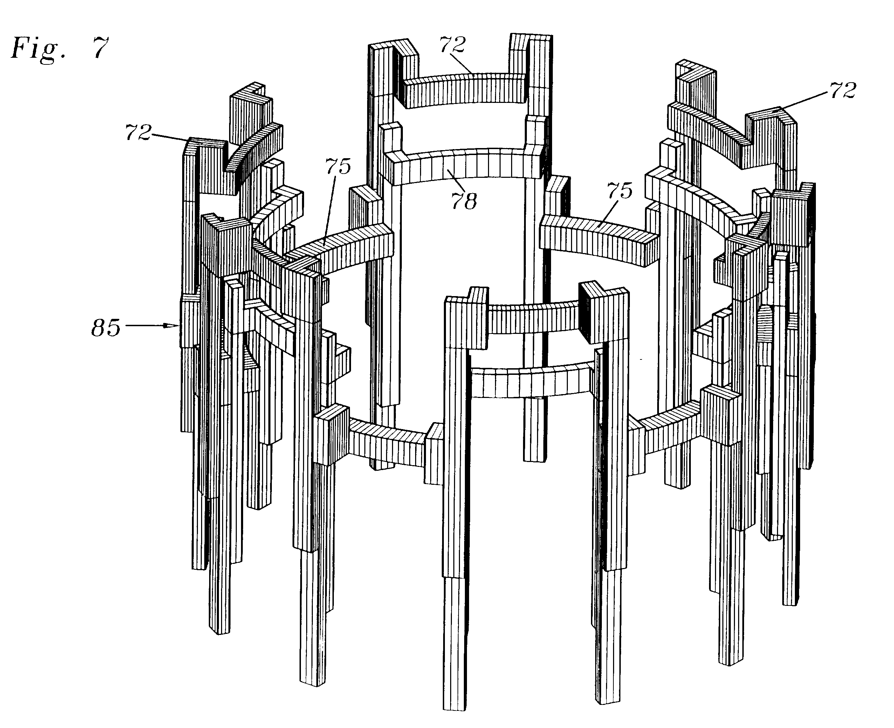

**Figur 7** zeigt wie die Stegschicht **81** der inneren Verbindungskopfhälfte aus den drei Einheitenbauformen **72, 75** und **78** zusammengesetzt wird. Es wird deutlich wie beim Ineinanderschieben der Leiterteile ein selbsttragendes, stabiles Paket **85** entsteht, das zusammen mit der zur gleichen Verbindungskopfhälfte gehörenden zweite Einheitenstegschicht den folgenden Montageprozeß in den weichmagnetischen Körper vereinfacht. Stecken die Einheiten spielfrei in den Nuten kann auf eine zusätzliche Fixierung z.B. durch Klebeschichten verzichtet werden.

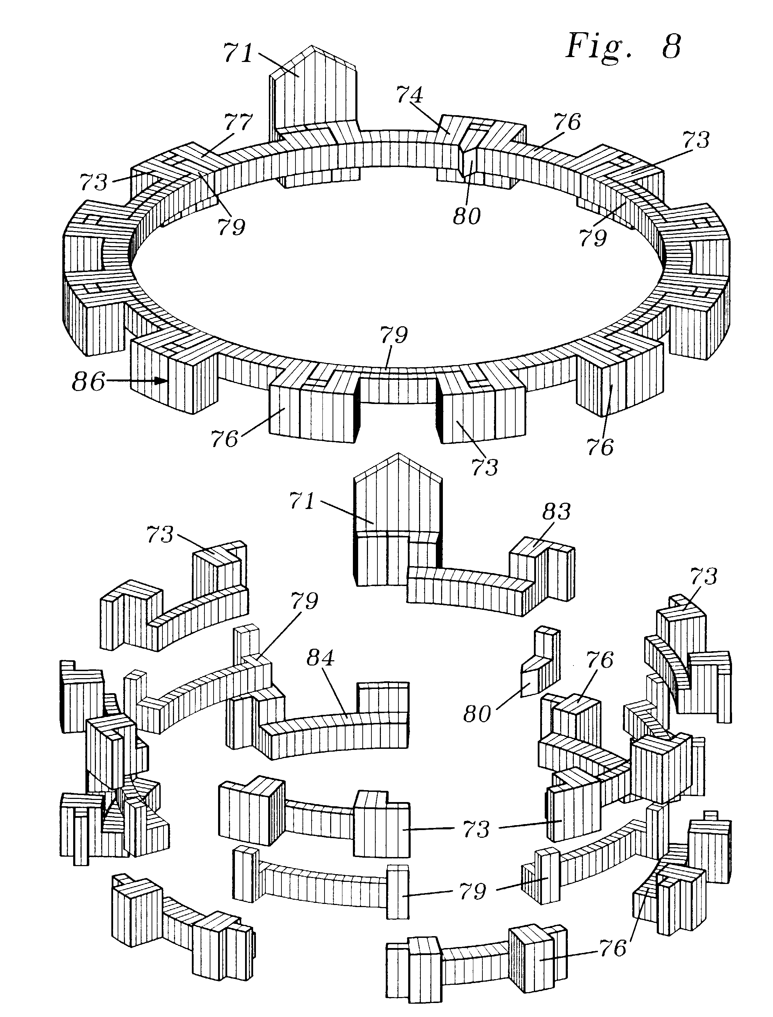

Im oberen Teil von **Figur 8** wird die zur Einheitenstegschicht aus Fig. 7 gehörende Verbindungsleiterstegschicht bereits zu einem kompakten Paket **86** zusammengeschoben dargestellt. Darunter befinden sich die Leiterelemente der zweitäußersten Stegschicht axial versetzt angeordnet, wobei die Leiterelemente einer Lage in einer axialen Ebene liegend dargestellt sind. Neben dem Prozeß des Zusammenschiebens wird ersichtlich, daß alle Leiterelemente der äußeren Verbindungskopfhälfte zusammen eine kompakte ringförmige Scheibe bilden. Nach dem Enschieben der Einheitenpakete **85** in den weichmagnetischen Körper, werden diese Scheiben axial auf deren Enden gepreßt. Alle Verbindungen sind von außen zugänglich und können z.B. mit einem Laser- oder Elektronenstrahl aufgeschmolzen werden, wodurch der Innenwiderstand des entstandenen Leiterstranges sehr geringe Werte aufweist. Bei zu hohen Widerstandswerten ist ein Nachbessern durch wiederholtes, gezieltes Aufschmelzen und/oder lokales Aufbringen von Leitermaterial möglich. Die Aussparungen für die Nutstabenden sind nicht dargestellt. In den beiden Stegschichten sind die drei Bauformen der Verbindungsleiter **73, 76, 79** und die beiden Anschlußleiter **121, 130** aufgrund der symmetrischen Enden gleich, während sich die Wechselleiter **134, 135** unterscheiden. Unabhängig von der Polpaarzahl bcnötigt der gesamte Leiteraufbau fünfzehn Leiterelementbauformen (6E+3V+4W+2A).

## Patentansprüche

1. Mehrphasige elektrische Maschine mit achsparallelen Nutstäben, die untereinander zumindest auf einer Maschinenseite durch angefügte Verbindungsleiter verbunden sind,
**dadurch gekennzeichnet,** daß in den vor den Stirnseiten des weichmagnetischen Körpers angeordneten Verbindungsköpfen als Formteile mit variablem Querschnitt und ohne Biegeradien vorgefertigte Leiterteile (41 - 46), tangential und axial nur durch dünne Klebe- und/oder Isolierschichten getrennt, flächig aneinanderliegen, wobei alle Leiterteile einer Stegschicht (49, 50) zu einer Phase gehören und die Anzahl der in einem Verbindungskopf axial hintereinanderliegenden Stegschichten der Anzahl der Nuten pro Polteilung entspricht.

2. Mehrphasige elektrische Maschine nach Anspruch 1,
**dadurch gekennzeichnet,** daß alle Leiterteile einer Stegschicht (49, 50) jeweils vollständige, rinförmige Pakete (85, 86) bilden, wobei sich die Anzahl der Verbindungsleiter (73, 76, 79) in zwei tangential aufeinanderfolgenden Sektoren einer Stegschicht (49, 50) höchstens um einen Verbindungsleiter unterscheidet.

3. Mehrphasige elektrische Maschine nach Anspruch 1,
**dadurch gekennzeichnet,** daß die beiden Verbindungsköpfe ringförmige Scheiben mit rechteckförmigem Querschnitt sind, deren Volumen außer Leitermaterial nur dünne Klebe- und Isolierschichten aufweist.

4. Mehrphasige elektrische Maschine nach einem der Ansprüche 1 bis 3,
**dadurch gekennzeichnet,** daß ein Leiterstrang (70) aus der Reihenschaltung einer der Nutstabanzahl pro Nut entsprechende Anzahl von Lagen besteht, wobei eine Lage sich aus mindestens drei Nutstäben, die in unterschiedlichen Polteilungen liegen, sowie deren Verbindungsleitern (73, 76, 79) zusammensetzt und die tangentiale Stromrichtung aufeinanderliegender Lagen in den Verbindungsköpfen entgegengesetzt ist.

5. Mehrphasige elektrische Maschine nach einem der Ansprüche 1 bis 3, wobei zwischen zwei Nutstäben einer Nut die in einem Leiterstrang (17) aufeinander folgen nur ein Nutstab aus einer anderen Polteilung geschaltet ist,
**dadurch gekennzeichnet,** daß die Rückführung des Stromes durch jeweils mindestens einen Nutstab aus beiden benachbarten Polteilungen erfolgt.

6. Mehrphasige elektrische Maschine nach einem der vorangehenden Ansprüche,
**dadurch gekennzeichnet,** daß jeder zweite Verbindungsleiter eines Leiterstranges (39, 40) jeweils mit den beiden Nutstäben mit denen er leitend verbunden ist eine vorgefertigte Einheit (41, 42, 43) bildet.

7. Mehrphasige elektrischen Maschine nach einem der vorangehenden Ansprüche,
**dadurch gekennzeichnet,** daß die Nutstäbe als Kunststäbe ausgebildet sind.

8. Mehrphasige elektrische Maschine nach einem der vorangehenden Ansprüche,
**dadurch gekennzeichnet,** daß der Querschnitt der Leiterstränge in Teilbereichen, in denen Verbindungsleitern (53, 56, 59, 62, 65) mit den Enden der Nutstäbe zusammenfügt sind, tangential größer als der Nutstabquerschnitt ist, wobei die Leiterquerschnittsvergrößerung (69) axial eine größere Ausdehnung als der mittlere Bereich der Verbindungsleiter aufweist.

9. Mehrphasige elektrische Maschine nach Anspruch 8,
**dadurch gekennzeichnet,** daß die Leiterquerschnittsvergrößerungen (69) von Leitersträngen benachbarter Nuten axial teilweise flächig aneinanderliegen, wobei beide Leiterquerschnittsvergrößerungen gemeinsam die axiale Ausdehnung des Verbindungskopfes bilden und somit den Verbindungskopf axial in zwei Hälften unterteilen, wobei jeder Nutstab mit einem Ende zur inneren Verbindungskopfhälfte und mit dem anderen Ende zur äußeren Verbindungskopfhälfte beiträgt.

10. Mehrphasige elektrische Maschine nach einem der vorangehenden Ansprüche,
**dadurch gekennzeichnet,** daß die Enden (47) der Nutstäbe oder Einheiten (41, 42, 43) einen sich zum Ende hin konisch verjüngenden Querschnitt und die sie aufnehmenden Aussparungen (48) der Verbindungsleiter (44, 45, 46) mit zunehmendem Abstand zur Stirnseite des weichmagnetischen Körpers eine kleiner Querschnittsfläche aufweisen.

## Claims

1. A multiphase electric machine with co-axial slot bars which, at least on one side of the machine, are joined to each other by attached connecting conductors wherein the connector heads which lie in front of the face side of the soft magnetic body consist of prefabricated molded conductor parts with variable cross sections and without bending radii (41 - 46), the conductor parts abutting each other being tangentially and axially separated by thin adhesive and/or insulating layers, wherein all conductor parts of a plane of links (49, 50) belong to one phase, and wherein the number of the axially successive planes of links within a connector head correspond to the number of grooves per pole pitch.

2. The multiphase electric machine as recited in claim 1 wherein all planes of links (81, 82) constitute respective complete annular packages (85, 86) in which the number of the connecting conductors (73, 76, 79) in two tangentially sequential sectors of a plane of links (81, 82) are differentiated at most by one connecting conductor.

3. The multiphase electric machine as recited in claim 1 wherein the two connector heads are annular disks with a rectangular cross section whose volume contains, besides conductor material, only thin adhesive and insulating layers.

4. The multiphase electric machine as recited in claim 1 wherein a conductor lane (70) consists of the serial connection of the number of layers corresponding to the number of slot bars per groove, a layer consisting of at least three slot bars which lie in different pole pitches as well as their connecting conductors (73, 76, 79), and wherein the tangential direction of current in abutting layers in the connector heads is opposite to each other.

5. The multiphase electric machine as recited in claim 1 in which only one slot bar of a different pole pitch is placed between two successive slot bars of a groove in a conductor lane (17) wherein return of the current occurs through at least one each of the slot bars of the two adjacent pole pitches.

6. The multiphase electric machine as recited in claim 1 wherein every other connecting conductor of a conductor lane (39, 40) together with the two respective slot bars to which it is conductively connected constitute a prefabricated unit (41, 42, 43).

7. The multiphase electric machine as recited in claim 1 wherein the slot bars are designed as divided bars.

8. The multiphase electric machine as recited in claim 1 wherein the cross section of the conductor lanes in those partial sections in which the connecting conductors (53, 56, 59, 62, 65) are joined with the ends of the slot bars are tangentially larger than the cross section of the slot bars and in which the enlargement of the conductor cross section (69) is axially larger than that of the middle range of the connecting conductors.

9. The multiphase electric machine as recited in claim 8 wherein the enlarged conductor cross sections (69) of conductor lanes of adjacent grooves partially abut on the axial plane, both said enlargements of the conductor cross sections together constituting the axial extent of the connector head and thereby bisecting the connector head axially, and wherein each slot bar contributes with one end to the inner half of the connector head and with the other end to the outer half of the connector head.

10. The multiphase electric machine as recited in claim 1 wherein the cross section of the ends (47) of the slot bars or the units (41, 42, 43) tapers conically towards the end and the receiving recesses (48) of the connecting conductors (44, 45, 46) show a decreasing cross sectional surface as the distance to the face of the soft magnetic body increases.

## Revendications

1. Machine électrique polyphasée avec des barreaux coaxiaux dans les rainures, qui sont reliés les uns aux autres au moins d'un côté de la machine grâce à des conducteurs de liaison ajoutés,
ce qui caractérise que des pièces conductrices (41-46) préfabriquées, ajustées les unes aux autres en surface dans les têtes de liaison sur le front des corps magnétiques doux comme pièces-moules avec une coupe transversale variable et sans rayons cintrés, isolées tangentiellement et axialement uniquement par des couches fines de colle ou d'isolation, sont ajustées les unes aux autres en surface, où toutes les pièces conductrices d'un niveau de traverse (49, 50) appartiennent à une phase et où le nombre des niveaux de traverse se trouvant en série axialement dans une tête de liaison correspond au nombre de rainures par division polaire.

2. Machine électrique polyphasée d'après la revendication 1,
ce qui caractérise que tous les niveaux de traverse (81, 82) forment chacun des paquets entiers en forme d'anneau (85, 86), où le nombre des conducteurs de liaison (73, 76, 79) dans deux secteurs d'un niveau de traverse (81, 82) se suivant tangentiellement se différencie par au plus un conducteur de liaison.

3. Machine électrique polyphasée d'après la revendication 1,
ce qui caractérise que les deux têtes de liaison sont des disques en forme d'anneau avec une coupe transversale rectangulaire, dont le volume ne montre en-dehors du matériau conducteur que de fins disques de colle et des disques isolants.

4. Machine électrique polyphasée d'après les revendications 1 à 3,
ce qui caractérise qu'une corde conductrice (70) se compose du couplage d'un nombre de niveaux correspondant au nombre de barreaux par rainure, où un niveau se compose d'au moins trois barreaux se situant sur différentes divisions polaires ainsi que leurs conducteurs de liaison (73, 76, 79), et où le sens tangentiel du courant électrique des niveaux se trouvant les uns sur les autres est opposé dans les têtes de liaison.

5. Machine électrique polyphasée d'après les revendications 1 à 3, où, entre deux barreaux d'une rainure qui se suivent dans une même corde conductrice (17), un barreau seulement, d'une autre division polaire, est connecté,
ce qui caractérise que le sens retour du courant électrique s'effectue chaque fois au travers d'au moins un barreau de rainure de deux divisions polaires voisines.

6. Machine électrique polyphasée d'après l'une des revendications précédemment citées,
ce qui caractérise que chaque deuxième conducteur de liaison d'une corde conductrice (39, 40), chacun avec les deux barreaux avec lesquels il est relié de manière directive, forme une unité préfabriquée (41, 42, 43).

7. Machine électrique polyphasée d'après l'une des revendications précédemment citées,
ce qui caractérise que les barreaux dans les rainures sont formés comme des barreaux de plusieurs pièces assemblées.

8. Machine électrique polyphasée d'après l'une des revendications précédemment citées,
ce qui caractérise que la coupe transversale des cordes conductrices dans des parties dans lesquelles des conducteurs de liaison (53, 56, 59, 62, 65) sont assemblés avec les extrémités des barreaux, est tangentiellement plus grande que ne l'est la coupe transversale du barreau dans les rainures où l'agrandissement de la coupe transversale du conducteur montre une plus grande distension axiale que la partie centrale du conducteur de liaison.

9. Machine électrique polyphasée d'après la revendication 8,
ce qui caractérise que les agrandissements de coupe transversale du conducteur (69) de rainures voisines de cordes conductrices se trouvent axialement partiellement les uns à côté des autres en surface, où les deux agrandissements de coupe transversale du conducteur forment ensemble la distension axiale de la tête de liaison et ainsi subdivisent axialement la tête de liaison en deux moitiés, où chaque barreau dans les rainures contribue par une extrémité à la moitié intérieure de la tête de liaison et par l'autre extrémité à la moitié extérieure de la tête de liaison.

10. Machine électrique polyphasée d'après l'une des revendications précédemment citées,
ce qui caractérise que les extrémités (47) des barreaux dans les rainures ou des unités (41, 42, 43) comprennent une coupe transversale se rétrécissant à l'extrémité en forme de cône et des ouvertures (48) des conducteurs de liaison (44, 45, 46) accueillant les extrémités avec un écart croissant d'avec le côté frontal du corps magnétique doux, une plus petite surface de coupe transversale.
